# EUROPEAN PATENT APPLICATION

(11) **EP 2 428 456 A1**
(43) Date of publication of application: **14.03.2012**
(21) Application number: 11180528.9
(22) Date of filing: 08.09.2011
(51) Int. Cl.: B65D 1/02, C08K 3/34

(54) **An oxygen barrier molded container and method for production thereof**

(30) Priority: 13.09.2010 US 880870; 26.08.2011 US 527819 P
(71) Applicant: IPL INC., St-Damien Bellechasse, Québec G0R 2Y0 (CA)
(72) Inventor: Mercier, Stéphane, St-Damien, Québec G0R 2Y0 (CA); Fillion, Michel, Beaumont, Québec G0R 1C0 (CA); Levesque, Rodrick, Saint-Gervais, Québec G0R 3C0 (CA); Goldberg, Harris, Edison, NJ New Jersey 08820 (US); Feeney, Carrie, Bridgewater, NJ New Jersey 08807 (US)
(74) Representative: Lavialle, Bruno François Stéphane

(57) **Abstract**

A method for manufacturing a plastic container (10) which is substantially impervious to oxygen comprising the steps of corona treating a raw stock of polypropylene film; coating a first side of said raw stock of polypropylene film with an aqueous oxygen barrier solution; placing the film in an injection mold; and injection molding a polypropylene material into the mold to bring the polypropylene material in direct contact with the aqueous oxygen barrier solution. An oxygen resistant container (10) has a floor (18). A sidewall (12) extends from the floor (18). An oxygen barrier (112) material is disposed on a film. The film is disposed on the container (10) so that the oxygen barrier (112) material is in direct contact with the sidewall (12). The oxygen barrier (112) material is one of a nano-silicate and a nano-clay.

## Description

### BACKGROUND OF THE INVENTION

This invention is related to molded plastic containers, and in particular, creating a molded plastic container which also acts as an oxygen barrier to products contained therein.

It is well known in the art that plastic pails and containers are used for the storing of perishable items. The shelf life of perishable items such as foods, medicines and paints are affected by temperature, humidity and most importantly oxidation. In order to improve shelf life, many approaches have been taken including the formation of airtight seals, the use of better plastic materials, the use of plastic and foil seals across the opening of the container below the cap or lid of containers and even the use of labels about the container to prevent or slow down the rate at which the perishable item is exposed to oxygen. These prior art structures have been satisfactory, however, the plastic materials used for molding of containers still allow oxygen to pass there through and conventional labels do not envelope enough of the container surface to form an effective barrier. Therefore, over time, oxygen passes through the walls of injection, thermoformed and blow molded containers.

It is known from the prior art to put oxygen barriers into the interior structure of a laminate and to affix the laminate to the container. It is also known to injection mold an oxygen barrier material, such as a second plastic within the container wall. Although these structures may prove satisfactory, they require complex structures and/or molding techniques. They also require extra materials as the laminate requires extra layers between which to sandwich the oxygen barrier. The molding technique requires molding a cavity to the oxygen barrier material within the container wall, and then molding the second material into the cavity.

Accordingly, a structure and methodology for creating the containers which increases the impermeability of a molded plastic container wall, floor or lid to oxygen without significantly increasing cost, materials or complex is desired.

### BRIEF SUMMARY OF THE INVENTION

A container is molded from a plastic. The container has at least a floor and a wall extending therefrom. A film is coated with an oxygen barrier solution and then applied to the molded container. The film may be formed of a multilayer structure including a deposit of nano-particles sprayed on at least one side of the film substrate. The film is applied to the container during an injection molding of the container by an injection mold label process so that when applied, the oxygen barrier material is in direct facing relation with a wall of the container. In an embodiment, the nano-particles are silicate based and the film is corona charge treated.

### BRIEF DESCRIPTION OF THE DRAWINGS

Figure 1 is a perspective partial exploded view of a container formed in accordance with the invention;
Figure 2 is a sectional view of the label constructed in accordance with the invention;
Figure 3 is a schematic diagram of a first step in the process for injection molding an oxygen barrier about a container in accordance with the invention;
Figure 4A is a sectional view of an exemplary mold utilized for the application of an oxygen barrier to the container in accordance with the invention;
Figure 4B is an enlarged view of the groove area of Figure 4;
Figures 5A, 5B are before and after schematic diagrams showing the behavior of the bottom oxygen barrier film during the molding process in accordance with the invention;
Figure 6 is a partial sectional view of a container formed utilizing the mold of Figure 4 in accordance with the invention;
Figure 7a is an exploded schematic view of a container formed prior to injection molding in accordance with another embodiment of the invention;
Figure 7b is a schematic view of a container after injection molding in accordance with the invention; and
Figure 8 is a sectional view of an oxygen barrier layer constructed in accordance with another embodiment of the invention.

### DETAILED DESCRIPTION OF THE INVENTION

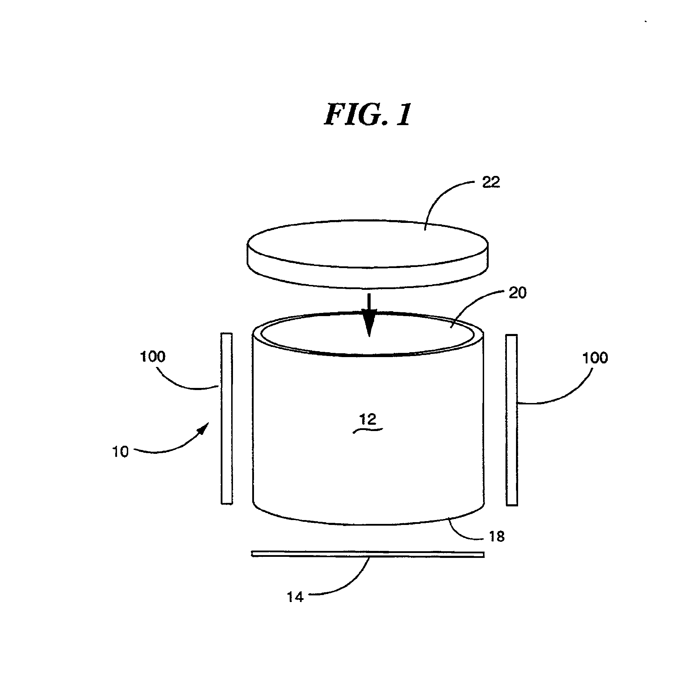

As illustrated in Figure 1, a container 10 constructed in accordance with the invention has enclosing side wall 12 and a floor 18 to provide a container having one open end 20. A lid 22 may be fitted across open end 22 to close the container sealing contents therein.

During manufacture to create container 10, a shot of plastic, such as polypropylene material by way of non-limiting example, is injection molded to form container 10, and/or lid 22.

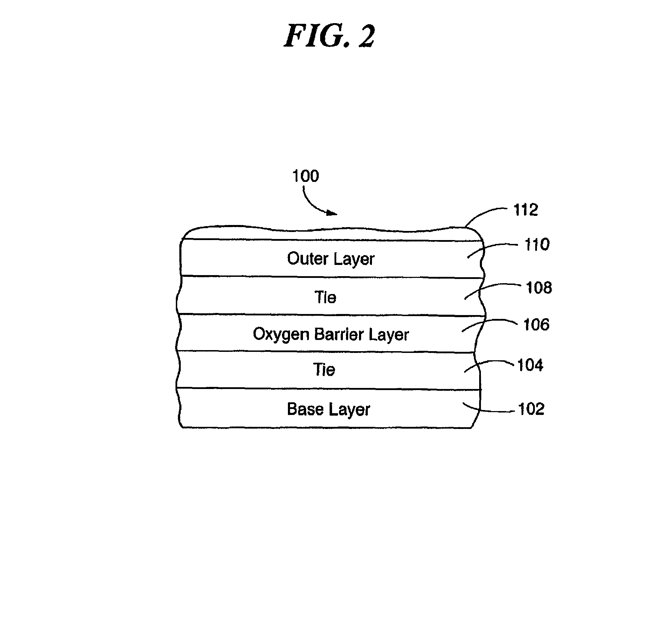

Apart from the manufacture of the container itself, a thin film barrier 100 is manufactured. The label may be a multilayer structure. In an embodiment, thin film 100 is applied as an in mold label. In an example, as shown in Figure 2, thin film 100 includes a first layer 102 which serves as a base layer. A tie layer 104 is disposed between first layer 102 and a gas barrier layer 106. A second tie layer 108 is disposed between the gas barrier layer 106 and an outer layer 110. At least one layer of the film is coated with, formed with, or includes within its structure an oxygen barrier solution to form oxygen barrier layer 112. Oxygen barrier layer 112 is internal to the structure of thin film barrier 100.

Thin film barrier 100 is applied to sidewall 12. A bottom film 14, having a similar structure to film 100 is applied to bottom 18.

In an embodiment, the barrier solution is formed from a nano-silicate solution or a nano-clay formed as an aqueous suspension as known from NanoLok PT MM manufactured by InMat Inc. A porous cylinder is used to dispose the aqueous nano-solution across at least one of the interior surface (facing towards layer 110) of first layer 102 or outer layer 110 of the film 100 by way of nonlimiting example. The barrier solution may also be disposed between layer 102 and 110 and an internally adjacent layer. The thickness of the nano-solution layer 112 is controlled by the diameter of the pores within the cylinder and the internal pressure of the cylinder. Other application methods such as cascade coating may be used. In an embodiment, the thickness of the aqueous solution layer 112 is less than or equal to 3 microns.

In a nonlimiting example, the first layer 102 and outer layer 110 are formed as plastic films, such as polypropylene. However, first layer 102 may be formed of treated or untreated paper, foil or the like.

The gas barrier layer 106, for example an oxygen barrier layer, may be formed from an EVOH. Layer 106 of thin film 100 could be replaced or coupled with PVDC (polyvinylidene chloride), aluminum, PVOH (polyvinyl alcohol), aluminum oxide, silicium oxide, a nano-clay or nano-crystalline cellulose alone or in any combination thereof. The properties of the various layers may enable film 100 to act as a moisture and/or light barrier. Furthermore, when thin film 100 is applied to an outer surface of container 10 such as sidewall 12 and bottom 18 as film 14, in sections 202, 204, thin film 100 may be printed upon with ink to form a label without affecting the use of the barrier's nano-particle layer 112. The film may also be provided on the interior structure of container 10 such as the interior of sidewall 12, floor 18 or lid 22.

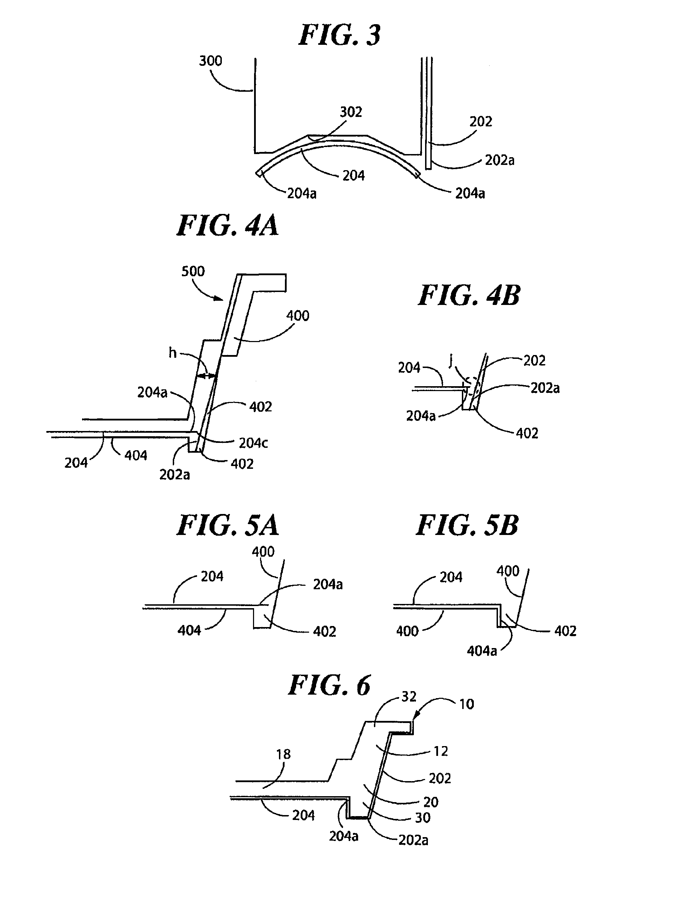

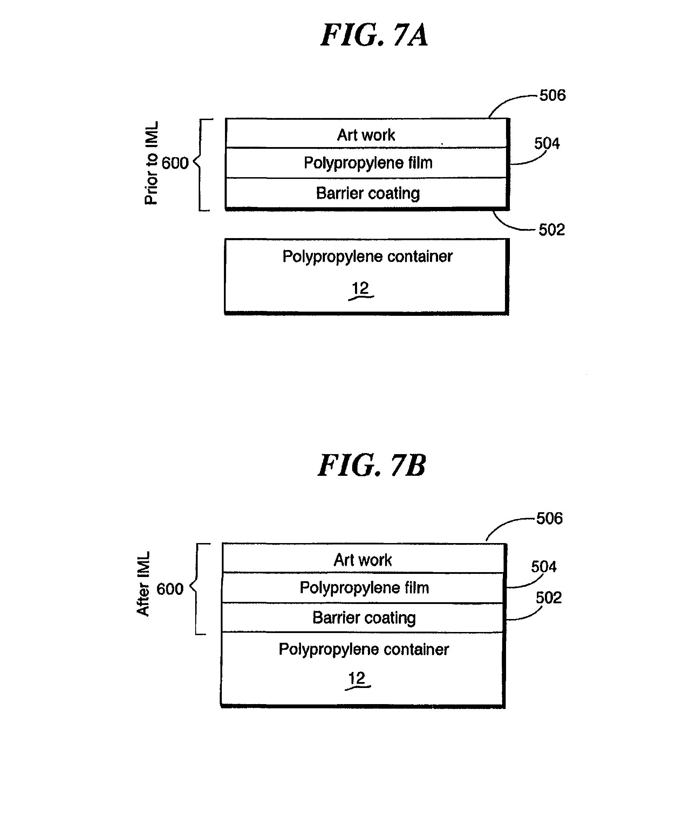

Reference is now made to Figures 7A, 7B wherein like numerals are utilized to indicate like structure, the primary difference between the embodiment of Figure 7B and the embodiment of Figs. 2, 6 is that the barrier coating is applied directly between a film and the plastic container.

In this embodiment, film barrier 600 includes a film substrate 504. In an embodiment, film substrate 504 is polypropylene. A first side of film 504 is coated with an oxygen barrier coating 502. As with the previous embodiments, barrier coating 502 may be a nano-solution such as a nano-silicate solution or a nano-clay formed as an aqueous solution as known from NanoLok PT MM manufactured by InMat Inc. Artwork 506 such as indicia for labeling may be disposed on the opposed side of film substrate 504. Additionally, as is known in the art as shown from the embodiment Figure 2, additional oxygen barrier layers or outer layers of material may also be disposed on polypropylene film 504.

The indicia 506 may be provided as a layer of an ultraviolet primer, an ultraviolet ink and an aqueous top coat.

The film barrier 500 is then affixed so that the oxygen barrier layer 502 is placed in facing relationship to what will become wall 12 of a container 10 during an injection mold labeling process (see Figure 7B). In effect, the base layer 102 of the embodiment of Figure 2 and the oxygen barrier layer 106 have been transposed so that barrier coating 502 after injection molding is in direct contact with polypropylene container 12 as shown in Figure 7B.

To facilitate the structure, in an embodiment, film 504 is formed from a standard polypropylene such as ETH-57 manufactured by Treofan Group which is then corona treated to change the surface tension enabling the nano-silicate barrier coating 502 to better adhere to the polypropylene forming film 504. During the process, by way of nonlimiting example, a 1 mil film is subjected to up to 10,000 W of current as a function of line speed. In one embodiment, 6,000 W is applied to a film being fed at 400 ft/min.

Furthermore, barrier coating 502 may contain adhesion promoters such as the formulation known from NanoLok EXC 1007V-1 to adhere to the polypropylene container during the injection mold labeling process.

In order to maximize the oxygen barrier nature of the present invention, the container is encapsulated, i.e. substantially entirely covered, with the barrier with any of the films discussed above so that a film covering at the bottom and about the sidewall of the container is desired. However, prior art molding processes resulted in the interference between the bottom film and the side film in the injection mold label formation process.

In accordance with an embodiment of the present invention, a bottom film 204 and a sidewall film 202 are carried by a formed mandrel 300 as shown in Figure 3. Mandrel 300 includes a concave bottom portion 302. Bottom film 204 has an area greater than the bottom surface of bottom portion 302. Side film 202, which is a wrap around film (in that it substantially wraps around the entire circumference of mandrel 300), has a length greater than mandrel 300.

Bottom film 204 also has an area greater than an area of container bottom 10. Side film 202 has a length greater than a length of sidewall 12. In this way, bottom film 204 extends beyond the bottom 18 of container 10 by an overhang portion 204a. Similarly, side film 202 overhangs container wall 12 by an overhang portion 202a. In order to prevent interference between bottom film 204 and wrap around film 202 during the molding process, a bottom surface 302 of mandrel 300 is formed at least in part with a concave shape to arc bottom film 204 to take up any slack and prevent interference between wrap around film 202 and bottom film 204. Each of wrap around film 202 and bottom film 204 are held to mandrel 300 by a vacuum pressure at mandrel 300 and/or a static charge of between 10 and 12 K volts.

In a next step, mandrel 300 with films 202, 204 thereon are inserted into a mold steel cavity 400 (see Figure 4A). Mold steel cavity 400 is formed with a groove 402 which extends below a floor 404 of mold steel cavity 400 much like the heel of a boot. Groove 402 receives the excess length of respective overhangs 202a, 204a of both label 202 and label 204 therein.

As seen in Figure 4A, a molded steel core 500 is inserted within mold steel cavity 400 with a gap h between the two as known in the art, to provide space for receiving the plastic shot during the molding process. The width of gap h being a function of the thickness of the desired container.

As seen in Figure 4b, a gap j exists between an edge 204c of bottom film 204 and a planer surface of side label 202. The gap is a function of the minimum distance required to separate a bottom label 204 having a section 204a sufficiently sized to cover an inner surface of the foot 30 (extend sufficiently across groove 402) without contacting side label 202. In an embodiment, gap j is about .005 inches. It should be noted that side label 202 is sufficiently longer than a side wall of container 10 so as to have sufficient material to cover the bottom and outside surface of foot 30, all of the sidewall of container 10 and, in an nonlimiting example, any overhanging lip 32 (see Figure 6).

In another embodiment, a single film dipper label may be used. A five faced diper label positioned at the bottom of mold 400 and used in an injection mold process would still cover 99.1% of the outer container surface. However, a preferred embodiment is the two label method which covers more than 99.4% of the surface.

Because of the level of static charge, air flow from the mandrel forces the label to the mold and the fact that the mold is made out of steel, when mandrel 300 is inserted into mold cavity 400, the attraction as a result of the static charge plus the air flow, between either of label 202, 204 and mold cavity 400 is greater than the attraction between either of film 202, 204 and mandrel 300. Accordingly, once in sufficient proximity to mold cavity 400, the labels 202, 204 are released from mandrel 300 and are held in place by the respective wall 402 and floor 404 of cavity 400.

As seen in Figs. 5A, 5B, film 204 is sufficiently rigid to maintain its shape across groove 402 (Figure 5A). However, during the injection molding process, the plastic shot, as it takes form, moves into groove 402 and forces overhang 204a of bottom film 204 into groove 402 and in fact, pinned against a wall 402 by the plastic as it attaches to the plastic. Similarly, the shot pushes overhang 202a of film 202 against a floor 404 of groove 402 between the shot and the floor.

As can be seen from Figure 6 in which a container molded from cavity 400 and core 500 is provided, because bottom label 204 has an area greater than the area of container bottom 18 including an overhang 204a sufficient to cover an inside surface of foot 30 of container 10, and side label 202 encircles sidewall 12 of container 10 and has a length greater than sidewall 12 sufficient to extend at least partially into groove 402 and cover a bottom and side of foot 30, and labels 202 and 204 are in close proximity at overhangs 204a, 202a, to ensure that the encapsulation of plastic container 10 is optimized without interfering with each other. Also label 202 extends at the top of the container (the lip) to optimize covering lip 32.

It is understood that films 202, 204 may have the structure of film 100. In another embodiment of the invention, a barrier solution is formed in a liquid or gel state. In an embodiment, the solution is a nano-clay formed of an aqueous suspension of nano-dispersed silicate and polyester resin such as NanoLok PT MM manufactured by InMat Inc. The barrier may also be a resin which cures about the container.

The aqueous gel may be applied as discussed above in connection with film 100 to an inner or outer surface of any of sidewall 12 or floor 18 by way of a dipping process, vapor deposition, an aqueous spray, or a fine particulate atomized spray. In an embodiment, container 10 may be heat treated prior to the deposition of the aqueous barrier solution onto a surface of container 10.

Lid 22 may be treated in the same way as the body of the container to enhance the oxygen barrier properties of lid 22.

In an alternative embodiment, the polypropylene stock material may be treated with the aqueous barrier solution prior to injection molding to form container 10. The raw stock of material such as polypropylene material may be dipped in a liquid or gel state of the barrier material, sprayed with the barrier material, or subject to vapor deposition of the barrier material or an atomized version of the solution. In this way, the injection molded lid 22 and/or container 10 are formed with an inherent oxygen barrier.

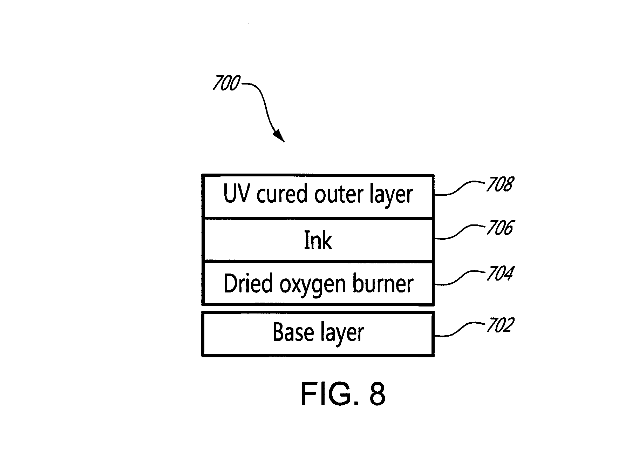

Reference is now made to Figure 8 in which an oxygen barrier film, generally indicated as 700, constructed in accordance with a second embodiment of the invention, is provided. Film 700 includes a base layer 702 made from polypropylene. In an embodiment, the polypropylene has a surface tension of 30 to 50 Dynes, for example about 40 Dynes.

A dried oxygen barrier layer 504 is disposed on base layer 702. In an embodiment, dried oxygen barrier 704 is applied to base layer 702 as an aqueous solution. The solution is made of water and polyurethane containing a suspension of about 14 percent nanosilicate or nanoclay by weight. The aqueous solution is applied either utilizing a slot die coating or reverse gravure coating process and then dried. A layer is formed to have a thickness dependent on the use for which the container is to be used. However, a layer of about 1.2 microns closely mimics the gas barrier properties of an EVOH layer.

An ink layer 706, to provide a label indicia, is disposed directly on dried oxygen barrier 704 once dried oxygen barrier 704 has dried. In an embodiment, ink layer 706 is formed with an ultraviolet (UV) cured ink.

A UV cured outer layer 708, such as an epoxy layer, is disposed on ink layer 706. UV cured outer layer 708 provides a protective coating to ink layer 706 and stabilizes the dried oxygen barrier 704 protecting the integrity of label 700.

During formation, oxygen barrier layer 704 is directly applied to the polypropylene base layer 702. In an embodiment, oxygen barrier layer 704 is applied to substantially the entire surface of base layer 702. The oxygen barrier layer 704 is then dried in situ. The ink layer 706, in an, but non-limiting embodiment, may be printed directly onto the oxygen barrier layer 704. Furthermore, in an embodiment the UV cured outer layer 708, in an non-limiting embodiment, is disposed directly onto the ink layer 706 and any exposed dried oxygen barrier layer 704. During formation of the container, the container may be formed utilizing the injection mold label process as discussed above, with the base layer 702 in facing relationship with container 10 so that UV cured outer layer 708 is facing away from container 10. Furthermore, once cured, UV cured outer layer 708 is at least translucent or transparent to allow viewing of ink layer 706 therethrough.

As people will now be in a position to appreciate, the present invention provides an oxygen resistant container comprising a floor, a sidewall extending from the floor; and a film barrier having a film substrate, an oxygen barrier material being disposed on the film substrate and directly against and in facing relationship with at least one of the floor and sidewall, the oxygen barrier material being one of a nano-silicate and a nano-clay. The film may be formed from polypropylene, so as a corona treated polypropylene for example. In an embodiment, the oxygen barrier material is disposed on a first side of the film and indicia is disposed on an opposed side of the film, the indicia indicia being formed from an ultraviolet primer and an ultraviolet ink for example.

The present invention provides a method for manufacturing a plastic container which is substantially impervious to oxygen comprising corona treating a raw stock of polypropylene film, coating a first side of the raw stock of polypropylene film with an aqueous oxygen barrier solution, placing the polypropylene film in an injection mold, and injection molding a polypropylene material into the mold to bring the polypropylene material in direct contact with the aqueous oxygen barrier solution. The aqueous oxygen barrier solution is an aqueous suspension of a nano-dispursed silicate for example. The method may further comprise corona discharge treating the polypropylene film. The method may further comprise printing indicia on the polypropylene film.

The present invention provides an oxygen resistant container comprising, a floor, a side wall extending from the floor, and an oxygen barrier material disposed about at least one of the floor and the side wall, the oxygen barrier material being a film, the film including a base layer, a dried oxygen barrier layer disposed on the base layer, an ink layer printed on the dried oxygen barrier layer, and an ultra-violet cured outer layer disposed on the ink layer. The base layer is disposed in facing relationship with the at least one of the floor and side wall. The base layer is a polypropylene layer having a surface tension of about 30 to 50 Dynes. The dried oxygen barrier is formed from an aqueous solution, which when liquid includes about 14 percent by weight of at least one of nanosilicate and nanoclay.

The present invention provides a method for manufacturing a plastic container which is substantially impervious to oxygen comprising the steps of providing an oxygen barrier film dimensioned to substantially circumscribe at least one of a side wall and a floor of the plastic container, providing a mold, the mold having a floor and a side wall, and injection molding a plastic container within the cavity, the oxygen barrier film including a base layer in facing relationship with the plastic container, a dried oxygen barrier disposed on the base layer, ink printed on the dried oxygen barrier, and an ultraviolet cured outer layer disposed on the ink layer. In an embodiment, the base layer is a polypropylene layer having a surface tension of about 30 to 50 Dynes. The dried oxygen barrier is formed from an aqueous solution, which when liquid includes about 14 percent by weight of at least one of nanosilicate and anoclay.

The present invention provides an oxygen barrier film for coating a plastic container comprising a base layer, a dried oxygen barrier layer disposed on the base layer, an ink layer printed on the oxygen barrier layer, and an ultra violet cured outer layer disposed on the ink layer. The base layer is a polypropylene layer having a surface tension of about 30 to 50 Dynes for example. The dried oxygen barrier is formed from an aqueous solution, which when liquid includes about 14 percent by weight of at least one of nanosilicate and nanoclay for example.

While this invention has been particularly shown and described with reference to the embodiments thereof, it will be understood by those skilled in the art that various changes in form and detail may be made therein without departing from the nature and scope of the invention encompassed by the appended claims.

## Claims

1. An oxygen resistant container (10) comprising:
a floor (18);
a sidewall (12) extending from said floor (18); and
a film barrier (100) having a film substrate (504), an oxygen barrier material (112) being disposed on said film substrate and directly against and in facing relationship with at least one of said floor (18) and sidewall (12), the oxygen barrier (112) material being one of a nano-silicate and a nano-clay.

2. The oxygen resisting container (10) of claim 1, wherein said film barrier (100) is formed from polypropylene.

3. The oxygen resistant container (10) of claim 1, wherein said oxygen barrier (112) material is disposed on a first side of said film barrier (100) and an indicia (506) is disposed on an opposed side of said film barrier (100).

4. A method for manufacturing a plastic container which is substantially impervious to oxygen, comprising the steps of:
corona treating a raw stock of polypropylene film;
coating a first side of said raw stock of polypropylene film with an aqueous oxygen barrier solution;
placing the polypropylene film in an injection mold; and
injection molding a polypropylene material into the mold to bring the polypropylene material in direct contact with the aqueous oxygen barrier solution.

5. An oxygen resistant container (10), comprising:
a floor (18);
a side wall (12) extending from said floor (18); and
an oxygen barrier material disposed about at least one of said floor (18) and said side wall, the oxygen barrier material being a film, the film including a base layer (102, 702), a dried oxygen barrier layer (504) disposed on the base layer (102, 702), an ink layer (706) printed on the dried oxygen barrier layer (504), and an ultra-violet cured outer layer (708) disposed on the ink layer (706).

6. The oxygen resistant container (10) of claim 5, wherein said base layer (102, 702) is disposed in facing relationship with the at least one of the floor (18) and side wall (12).

7. The oxygen resistant container (10) of claim 5, wherein the ink is an ultraviolet cured ink.

8. The oxygen resistant container (10) of claim 5, wherein the base layer (102, 702) is a polypropylene layer having a surface tension of about 30 to 50 Dynes.

9. The oxygen resistant container (10) of claim 5, wherein the dried oxygen barrier (704) is formed from an aqueous solution, which when liquid includes about 14 percent by weight of at least one of nanosilicate and nanoclay.

10. A method for manufacturing a plastic container which is substantially impervious to oxygen comprising the steps of:
providing an oxygen barrier film dimensioned to substantially circumscribe at least one of a side wall and a floor of the plastic container;
providing a mold, the mold having a floor and a side wall; and
injection molding a plastic container within the cavity, the oxygen barrier film including a base layer (102, 702) in facing relationship with the plastic container, a dried oxygen barrier disposed on the a base layer (102, 702), ink printed on the dried oxygen barrier, and an ultraviolet cured outer layer disposed on the ink layer (706).

11. The method of claim 10, wherein the a base layer (102, 702) is a polypropylene layer having a surface tension of about 30 to 50 Dynes.

12. The method of claim 10, wherein the dried oxygen barrier is formed from an aqueous solution, which when liquid includes about 14 percent by weight of at least one of nanosilicate and nanoclay.

13. An oxygen barrier film for coating a plastic container (10) comprising:
a base layer (702);
a oxygen barrier layer (704) disposed on the a base layer (702);
an ink layer (706) printed on the oxygen barrier layer (704); and
an ultra violet cured outer layer (708) disposed on the ink layer (706).

14. The oxygen resistant container (10) of claim 13, wherein the base layer (702) is a polypropylene layer having a surface tension of about 30 to 50 Dynes.

15. The oxygen resistant container (10) of claim 13, wherein the oxygen barrier (704) is formed from an aqueous solution, which when liquid includes about 14 percent by weight of at least one of nanosilicate and nanoclay.
